# EUROPÄISCHE PATENTSCHRIFT

(11) **EP 0 359 121 B1**
(45) Veröffentlichungstag und Bekanntmachung des Hinweises auf die Patenterteilung: **12.01.1994**
(21) Anmeldenummer: 89116522.7
(22) Anmeldetag: 07.09.1989
(51) Int. Cl.: B23Q 11/08, F16B 21/08

(54) **Abdeckkasten für teleskopartig verkürz- und verlängerbarer Teleskopabdeckungen von Werkzeugmaschinenbahnen**
Covering boxes for telescopically movable covers on machine tool guides
Carter de protection pour les protecteurs télescopiques de glissières de machines-outils

(30) Priorität: 16.09.1988 DE 3831477; 26.08.1989 DE 8910253 U
(43) Veröffentlichungstag der Anmeldung: 21.03.1990
(73) Patentinhaber: HCR-HEINRICH CREMER GMBH, D-41199 Mönchengladbach (DE)
(72) Erfinder: Cremer, Heinrich, D-4050 Mönchengladbach 4 (DE); Cremer, Klaus, D-4050 Mönchengladbach 4 (DE)
(74) Vertreter: Rehders, Jochen, Dipl.-Ing.

(56) Entgegenhaltungen:
- DE-A- 2 150 777
- DE-A- 3 711 147
- DE-U- 7 137 781
- DE-U- 8 901 686
- FR-A- 1 145 611
- FR-A- 1 499 287
- FR-A- 1 900 574

## Beschreibung

Die Erfindung betrifft einen Abdeckkasten teleskopartig verkürz- und verlängerbarer Teleskopabdeckungen von Werkzeugmaschinen nach dem Oberbegriff des Patentanspruchs 1.

Durch das DE-GM 77 32 540 und das DE-GM 19 61 816 sind Abdeck- und Dichtungsleisten für teleskopartig bewegbare Abdeckkästen an Werkzeugmaschinen bekannt, die aus einem dünnwandigen, an der Unterseite des vorderen Kastenlängsrandes anbringbaren leistenartigen Profilträgern und einer von diesem gehaltenen Abstreiferleiste, meist aus leicht elastisch verformbarem Material, bestehen, die mit einer nach unten vorspringenden Lippe auf der Oberseite des nächst kleineren Abdeckkastens dichtend aufliegt. Durch das DE-GM 81 07 714 ist ferner ein Abstreifer für Abdeckkästen für Führungsbahnen an Werkzeugmaschinen bekannt, wobei eine metallische Profilleiste Anwendung findet, in deren schwalbenschwanzförmiger Ausnehmung die elastische, auf dem nächst kleineren Kasten sich abstützende Abstreiferleiste aufliegt, die eine der Ausnehmung der Profilleiste entsprechende Längsrippe trägt. Bei der Abstreiferleiste nach der DE-OS 18 03 448 wie bei der Abstreifereinrichtung für Teleskop-Stahlabdeckungen nach der PCT-OS WO 87/06866 werden Abschnitte der Abstreiferleiste von den Flanschen eines T-förmigen nach unten weisenden Trägerteils der Profilleiste untergriffen. Bei diesen bekannten Ausführungsformen, bei denen die aus elastischem Material bestehende Abstreiferleiste mit einer an dem Kastenrand anzubringenden Trägerprofilleiste verbunden wird, wird die Abstreiferleiste in das Profil der Trägerleiste eingeschoben und hierdurch gehalten. Auch die Abstreif- und Dichtvorrichtungen für teleskopartig ineinander verschiebbare Abdeckkästen der DE-OS 29 37 307 und des DE-GM 71 37 781 beruhen auf dem Prinzip der Anwendung einer Träger- oder Halteleiste, die die Abstreifer- oder Dichtungsleiste aufnimmt oder hält und die ihrerseits mit der Unterseite der Kastenoberwand verbunden ist.

Bei einem in der FR-PS 1 499 287 beschriebenen, gattungsbildenden Abdeckkasten sind die Abstreiferleisten sowohl an der Unterseite des oberen Abdeckkastens als auch an der Oberseite des nächst kleineren Kastens mittels Nieten oder Schrauben befestigt und weisen gegeneinander gerichtete Abstreiferlippen auf, die im voll ausgezogenen Zustand aller Abdeckkästen ineinandergreifen sollen. Diese Lippen sind von den Außenseiten der Abdeckkästen weg nach innen gerichtet.

Der Erfindung liegt die Aufgabe zugrunde, einen Abdeckkasten mit einer Abstreifer- oder Mitnehmerleiste zu schaffen, die in ihrem konstruktiven Aufbau einfach ist und das Anbringen und Auswechseln der Leiste an dem Abdeckkasten zeit- und arbeitssparend erfolgen kann.

Zur Lösung dieser Aufgabe sieht die Erfindung die Merkmale des Anspruchs 1 vor. Die Merkmale der Unteransprüche dienen der Verbesserung und Weiterentwicklung der Merkmale dieses Anspruchs.

Die Erfindung geht von dem Gedanken einer trägerlosen Abstreifer- und Mitnehmerleiste mit unmittelbarer Befestigung an der Oberwand bzw. der Seitenwand des Kastens aus, wobei diese Befestigung ein klemmendes Einrasten oder ein Einknöpfen ohne Hilfsmittel wie Schrauben oder Nieten bzw. ohne Schweißen oder Kleben ist.

Auf der Zeichnung sind zwei Ausführungsbeispiele des erfindungsgemäßen Abdeckkastens mit seiner Abstreifereinrichtung vorgesehen und zwar zeigt
- Fig. 1: in schematischer Ansicht mehrere teleskopartig ineinandergeschobene Abdeckkästen,
- Fig. 2 und 3: die Ausbildung des vorderen Randes eines Abdeckkastens mit einer Abstreiferleiste gemäß der Erfindung nach einer Ausführungsform,
- Fig. 4 und 5: die Draufsicht auf die Abstreiferleiste und einen Abschnitt des vorderen Randes der Oberwand des Abdeckkastens und
- Fig. 6: eine weitere Form der Abstreiferleiste.

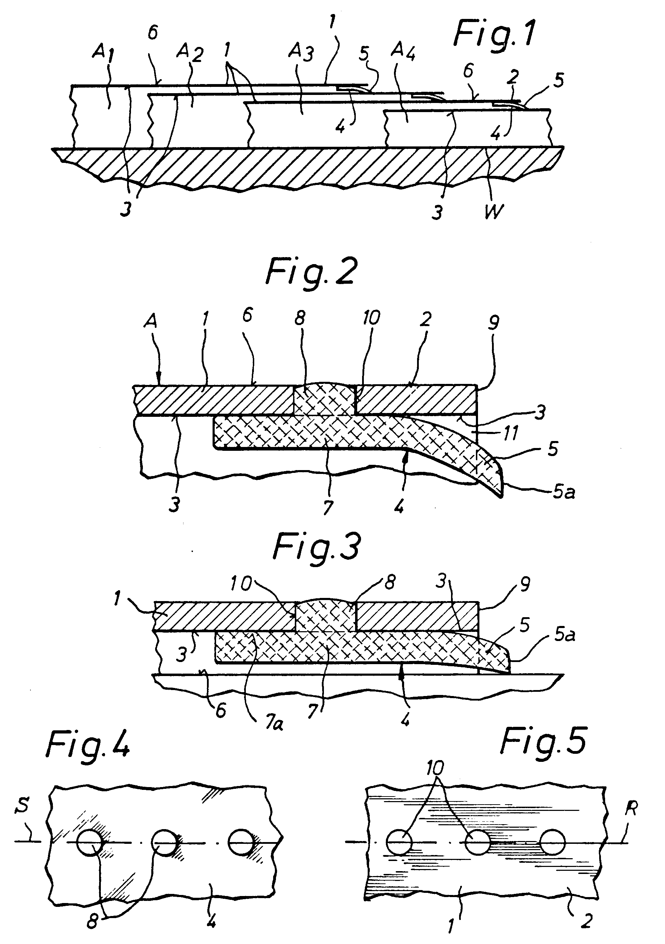

Fig. 1 zeigt mehrere Abdeckkästen, A₁, A₂, A₃, A₄, die (abgesehen von ihren Größenmaßen) gleichartig ausgebildet sind und es daher genügt, nachstehend nur jeweils einen der Kästen als Kasten A zu erläutern. Der Kasten A besitzt eine Oberwand 1 mit einem vorderen Abschnitt 2, mit dem sich der Kasten auf dem nächst kleineren Kasten abzustützen vermag, während der kleinste Kasten auf der Maschinenbahn W gleitet, so stützt sich der Kasten A₁ auf dem Kasten A₂ und dieser wiederum auf dem Kasten A₃ ab. Der vordere Abschnitt 2 des Kastens trägt an seiner Unterseite 3 eine Abstreiferleiste 4, mit deren Hilfe das genannte Abstützen des größeren Kastens auf dem kleineren Kasten erfolgt und die für ein Abstreifen von Spänen und Spülflüssigkeit von der Oberwand des kleineren Kastens sorgt. Die Abstreiferleiste 4 hat eine Abstreiferlippe 5, mit der das Abstreifen auf der Oberseite 6 der Oberwand 1 des kleineren Kastens erreicht wird (Fig. 3).

Die Abstreiferleiste 4 trägt an ihrem als Abstreiferkörper zu bezeichnenden Abschnitt 7 eine Reihe von querschnittsrunden Nocken 8, wobei die Nockenreihe (Fig. 4) sich parallel zu der Kante 5a der Lippe 5 erstreckt.

Im Abstand von der vorderen Stirnkante 9 ist in der Oberwand 1 des Abdeckkastens A eine entsprechende Reihe R von Bohrungen 10 zur Aufnahme der Nocken 8 vorgesehen, deren Abstand untereinander dem Abstand der Nocken 8 der Leiste 4 entspricht. Die Löcher 10 oder die Nocken 8 können konisch ausgebildet sein, um den Nocken 8 einen festen klemmenden Halt in den Bohrungen 10 zu geben. Die Nocken 8 haben ein geringes Querschnittsübermaß gegenüber dem Bohrungsquerschnitt, so daß auch hierdurch der beschriebene feste Sitz der Abstreiferleiste 4 an der Oberwand 1 gewährleistet wird.

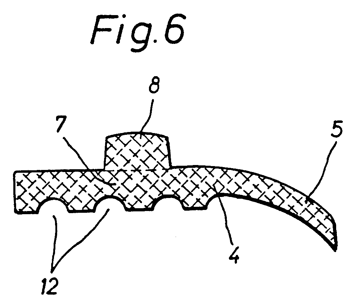

Die Abstreiferlippe 5 ragt etwas über die vordere Stirnkante 9 der Oberwand 1 hervor und ist in ihrem Ausgangszustand nach unten gegen die Oberwand 1 des nächst kleineren Kastens gebogen, wobei sich zwischen dieser Wand und der Oberseite der Abstreiferleiste 4 ein Zwickel 11 bildet (Fig. 2). Die Abstreiferleiste 4, die, wie dargestellt, trägerlos mit der Oberwand 1 des Abdeckkastens 4 verbunden ist, besteht aus elastisch verformbarem Material, um einerseits das Verformen der Lippe 5 zu gewährleisten, andererseits das Einknöpfen der Nocken 8 in die Bohrungen 10 zu ermöglichen bzw. zu erleichtern. Die Ausführungsform nach Fig. 6 zeigt einen Leistenkörper 7 mit an der Unterseite vorgesehenen Längsrillen 12 und eine Verjüngung der Lippe 5 gegenüber dem Abschnitt 7.

## Patentansprüche

1. Abdeckkasten verkürz- und verlängerbarer Teleskopabdeckungen für Führungsbahnen an Werkzeugmaschinen mit einer auf der Oberwand (1) des nächst kleineren Kastens aufliegenden Abstreiferleiste (4), wobei die Kastenoberwand parallel zu ihrer Vorderkante oder Hinterkante eine Bohrungsreihe (R) zur Aufnahme von Verbindungsmitteln für die Abstreiferleiste aufweist und die Abstreiferleiste mittels entsprechend angeordneten, in die Bohrungen ragenden Nocken oder Vorsprüngen unmittelbar und trägerlos an der Unterseite (3) der Oberwand (1) mit dieser verbunden ist, **dadurch gekennzeichnet**, daß die Nocken (8) oder Vorsprünge einteilig mit dem elastischen Leistenkörper (7) aus elastisch verformbarem Materialausgebildet sind, ein ein Klemmen der Nocken (8) oder Vorsprünge in den Bohrungen (10) der Oberwand (1) bewirkendes Querschnittsübermaß gegenüber dem Bohrungsdurchmesser besitzen und die Abstreiferleiste (4) eine etwas über die vordere Stirnkante (9) der Oberwand (1) hervorragende, nach unten gegen die Oberwand des nächst kleineren Kastens gebogene Abstreiferlippe (5) aufweist.

2. Abdeckkasten nach Anspruch 1, **dadurch gekennzeichnet**, daß die Bohrungen (10) der Kastenoberwand (1) oder die Nocken (8) der Vorsprünge der Leiste (4) sich konisch verjüngen oder mit einer stufenartigen Erweiterung versehen sind.

3. Abdeckkasten nach Anspruch 1, **dadurch gekennzeichnet**, daß die Lippe (5) am vorderen Leistenrand gegenüber dem mit der Unterseite (3) der Oberwand (1) unmittelbar verbundenen Leistenabschnitt (7) querschnittsverjüngt ist.

## Claims

1. Cover box for retractable and extensible telescopic covers for guideways on machine tools, comprising a wiper strip (4) resting upon the upper wall (1) of the next smaller box, the box upper wall having a row of holes (R) parallel to its front edge or rear edge for receiving connecting means for the wiper strip and the wiper strip being connected to the upper wall (1) at its lower face (3) directly and without supports by means of correspondingly disposed studs or projections penetrating into the holes, characterized in that the studs (8) or projections are formed in one piece with the elastic wiper body (7) of elastically deformable material, possess an overdimensioned cross-section compared with the hole diameter which causes jamming of the studs (8) or projections in the holes (10) of the upper wall (1), and the wiper strip (4) comprises a wiper lip (5), projecting somewhat beyond the front edge face (9) of the upper wall (1) and bent downwards against the upper wall of the next smaller box.

2. Cover box according to Claim 1, characterized in that the holes (10) of the box upper wall (1) or the studs (8) or projections of the strip (4) taper conically or are provided with a steplike widened zone.

3. Cover box according to Claim 1, characterized in that the lip (5) is tapered in cross-section at the front edge of the strip compared with the strip portion (7) directly connected with the lower face (3) of the upper wall (1).

## Revendications

1. Caisson de recouvrement pour capotage télescopique pouvant être raccourci et allongé, pour des pistes de guidage de machines outils avec une bande racleuse (4) reposant sur la paroi supérieure (1) du caisson plus petit venant ensuite, la paroi supérieure de caisson présentant, parallèlement à son arête avant ou à son arête arrière une rangée de perçages (R) pour recevoir des moyens de liaison pour la bande racleuse et la bande racleuse étant reliée directement et sans support à la face inférieure (3) de la paroi supérieure, avec cette dernière, au moyen de têtons ou de saillies disposés de manière correspondante et pénétrant dans les perçages, caractérisé en ce que les têtons (8) ou saillies sont réalisés d'un seul tenant avec le matériau déformable élastiquement du corps de bande (7) élastique, avec un surdimensionnement de la section transversale, provoquant un serrage des têtons (8) ou des saillies dans les perçages (10) de la paroi supérieure (1), par rapport au diamètre du perçage, et la bande racleuse (4) présentant une lèvre de raclage (5) sortant quelque peu de l'arête frontale avant (9) de la paroi supérieure (1) et repliée vers le bas en direction de la paroi supérieure du caisson plus petit venant ensuite.

2. Caisson de recouvrement selon la revendication 1, caractérisé en ce que les perçages (10) de la paroi supérieure (1) ou les têtons (8) des saillies de la bande (4) vont en s'effilant de façon conique ou sont pourvus d'un élargissement par degrés.

3. Caisson de recouvrement selon la revendication 1, caractérisé en ce que la lèvre (5) a une section transversale effilée sur la bordure avant de la bande, par rapport à la section de bande (7) reliée directement à la face inférieure de la paroi supérieure.
